# EUROPEAN PATENT APPLICATION

(11) **EP 3 754 195 A1**
(43) Date of publication of application: **23.12.2020**
(21) Application number: 18904923.2
(22) Date of filing: 28.12.2018
(51) Int. Cl.: F04B 53/14, F16J 1/04

(54) **ELASTIC PISTON AND HIGH-PRESSURE PUMPING SYSTEM**

(30) Priority: 12.02.2018 CN 201810147884; 15.03.2018 CN 201810217293
(71) Applicant: Huizhou Hydro Caresys Medical Co. Ltd, Huizhou, Guangdong 516083 (CN)
(72) Inventor: LUO, Fengling, Huizhou City, Guangdong 516083 (CN)
(74) Representative: Vitina, Maruta
(86) International application number: PCT/CN2018/125085
(87) International publication number: WO 2019/153955

(57) **Abstract**

An elastic piston and a high-pressure pumping system. The elastic piston includes a piston body (1). An end of a side of the piston body outwardly protrudes in a radial direction to form a skirt (2). A maximum diameter of the skirt (2) is greater than a diameter of a piston chamber (3). The skirt (2) can elastically abut against a wall of the piston chamber (3). Under the action of an elastic force, the skirt (2) consistently and adaptively abuts against the piston chamber (3) to avoid the occurrence of gap generated during the reciprocating movement of the piston, so as to form good sealing and thus prevent air from entering the piston chamber to mix with the fluid therein during the reciprocating movement of the piston, which improves the pump body in the operation stability and the service life, thereby reducing failure risk during the operation.

## Description

### TECHNICAL FIELD

The present application relates to medical equipment, and more particularly to an elastic piston and a high-pressure pumping system.

### BACKGROUND

A piston in the existing medical high-pressure pumping system is generally cylindrical. The piston is slidably received in a piston chamber and can reciprocate to supply power to pump fluid into and out of the pump chamber. The reciprocating motion of the piston is a repetitive backward and forward movement in a straight line. The fluid is pumped out of the pump chamber due to the forward movement of the piston, and the fluid is sucked into the pump chamber due to the reverse movement of the piston. The reverse movement of the piston can create a negative pressure in the pump chamber to push water to flow into the pump chamber. When the pump chamber is in the negative pressure, the presence of a tiny gap between the piston and the piston chamber will allow air to go into the pump chamber and then into a high-pressure water pipeline to form bubbles therein. Because air has great compressibility and is prone to gather around an inlet valve or an outlet valve in the pump body, opening and closing characteristics of the inlet valve or outlet valve are seriously affected, which results in the impact of high-pressure water flow on the weakest part of the pipeline, reducing the pressure bearing capacity of the pump body and increasing the failure risk.

### SUMMARY

The present application aims to provide an elastic piston and a high-pressure pumping system using the same.

The technical solutions of the present application are described as follows.

The present application provides an elastic piston, comprising a piston body;
characterized in that an end of a side of the piston body outwardly protrudes in a radial direction to form a skirt; and a maximum diameter of the skirt is larger than a diameter of a piston chamber.

In an embodiment, a sidewall of the other side of the piston body leans outward in a radial direction and forward in an axial direction to form a first inclined plane; the first inclined plane abuts against the piston chamber; a maximum diameter of the first inclined plane is larger than the diameter of the piston chamber; and the first inclined plane, the skirt and the piston chamber form a gap.

In an embodiment, a first inclined plane is provided at a sidewall of the other side of the piston body; a second inclined plane is provided at a sidewall of the side of the piston body; a concave region is formed on a center of the piston body; the first inclined plane and the second inclined plane meet at a first angle; a second angle is formed by the first inclined plane and a central axis of the piston body; and a maximum diameter of the first inclined plane is larger than the diameter of the piston chamber.

In an embodiment, the skirt is triangular; and an end wall of the side of the piston body that outwardly extends in the radial direction is a side wall of the skirt.

In an embodiment, a width of the skirt is greater than 0.01 mm.

In an embodiment, the first angle is greater than 60° and less than 180°; and the second angle is greater than 5° and less than 90°.

In an embodiment, an end wall of the other side of the piston body is recessed inward to form a pressure chamber; and a third inclined plane is circumferentially provided at a sidewall of the pressure chamber.

In an embodiment, the third inclined plane and the first inclined plane are tilted in the same direction.

In an embodiment, a thickness between the third inclined plane and the first inclined plane is greater than 0.1 mm.

The present application further provides a high-pressure pumping system, comprising the elastic piston mentioned above;
wherein the elastic piston is elastically received in a piston chamber and is able to reciprocate in the piston chamber.

The present application has the following beneficial effects.

In the elastic piston of the present application, a skirt is provided on the piston body to elastically abut against a wall of the piston chamber. The skirt that is elastic can adaptively and consistently abut against the inner wall of the piston chamber to create good sealing and thus prevent air from entering the piston chamber to mix with the fluid therein during the reciprocating movement of the piston, which improves the pump body in the operation stability and the service life, thereby reducing failure risk during the operation.

### BRIEF DESCRIPTION OF THE DRAWINGS

Fig. 1 is a cross-sectional view showing elastic contact between a piston body and a wall of a piston chamber according to an embodiment of the present application.
Fig. 2 schematically shows the piston body according to an embodiment of the present application.
Fig. 3 is another cross-sectional view showing elastic contact between the piston body and the wall of the piston chamber according to an embodiment of the present application.
Fig. 4 is a partial cross-sectional view of the piston body according to an embodiment of the present application.

In the drawings: 1, piston body; 2, skirt; 3, piston chamber; 4, first inclined plane; 5, flat plane; 6, gap; 7, second inclined plane; 8, recess; 9, pressure chamber; and 10, third inclined plane.

### DETAILED DESCRIPTION OF EMBODIMENTS

The present application will be further described below in detail with reference to the accompanying drawings and the embodiments. The following embodiments are illustrative and are not intended to limit the scope of the present application.

### Embodiment 1

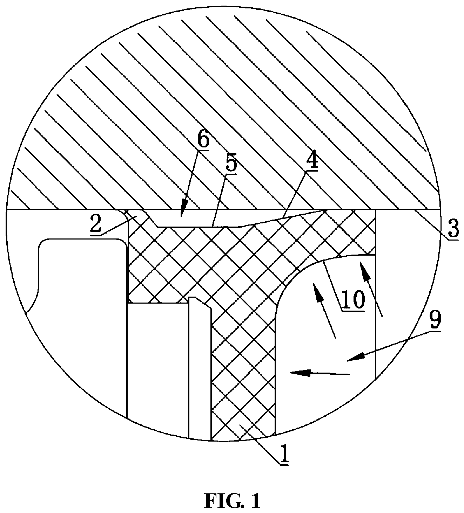

Provided herein is an elastic piston, as shown in Fig. 1. The elastic piston includes a piston body 1, which can reciprocate in a wall of a piston chamber 3 under the action of a power system. An end of a side of the piston body 1 outwardly protrudes in a radial direction to form a skirt 2. A maximum diameter of the skirt 2 is larger than a diameter of the piston chamber 3, so that the skirt 2 consistently elastically abuts against the piston chamber 3 to create good sealing. Preferably, a side wall of the other side of the piston body 1 leans outward in a radial direction and forward in an axial direction to form a first inclined plane 4. The first inclined plane 4 leans outward to abut against the wall of the piston chamber 3. A diameter of the end of the other side of the piston body 1 is larger than the diameter of the piston chamber 3, so that the piston body 1 is received in the piston chamber 3. The first inclined plane 4, specifically only a distal end thereof, elastically abuts against the wall of the piston chamber 3 to create good sealing. The skirt 2 and first inclined plane 4 are connected through a flat plane 5 therebetween, so that the skirt 2, the first inclined plate 4, the flat plane 5 and the wall of the piston chamber 3 form a gap 6, so as to reduce the contact area between the piston body 1 and the wall of the piston chamber 3, thereby reducing frictional resistance in the reciprocating movement of the piston body 1.

The traditional cylindrical piston and the piston chamber are required to cooperate with each other with desirable concentricity, cylindricity and diameter to achieve good sealing, and thus are needed to be manufactured with high accuracy. However, in practice, processing errors in the manufacturing process cause insufficient sealing between the traditional cylindrical piston and the wall of the piston chamber, particularly when one or two ends of two sides of the traditional cylindrical piston fail to contact with the wall of the piston chamber.

The elastic piston of the present application realizes good sealing mainly because the skirt 2 and the first inclined plane 4 elastically abut against the wall of the piston chamber, which requires low machining accuracy. In addition, the first inclined plane 4 has greater elastic deformation in the radial direction due to the presence of the gap 6, so that the close fit between the first inclined plane 4 and the wall of the piston chamber 3 is more easily realized. Moreover, when both the skirt 2 and first inclined plane 4 elastically abut against the wall of the piston chamber 3, a center axis of the piston body 1 is automatically aligned with an axis of the piston chamber 3, that is, the piston body 1 of the present application can be automatically centered.

The skirt 2 can be triangular, quadrangular, semicircular and elliptical, etc. Preferably, the skirt 2 is a triangular skirt 2. An end wall of the side of the piston body 1 that outwardly extends in the radial direction is a side wall of the triangular skirt 2. The skirt 2 is configured to ensure good air tightness during the reciprocating movement of the piston body 1. The up-and-down motion of the piston body 1 forms negative pressure within the piston chamber. Because the skirt 2 consistently and adaptively abuts against the wall of the piston chamber, air is maintained outside the piston chamber and fails to be mixed with the fluid in the piston chamber, thereby improving the pump body in the operation stability and the service life.

Further, an end wall of the other side of the piston body 1 is recessed inward to form a pressure chamber 9 that is U-shaped. The pressure chamber 9 is provided with a third inclined plane 10 which leans in the same direction as the first inclined plane 4. When the piston body 1 moves under pressure, the high-pressure fluid in the pressure chamber 9 presses toward the third inclined plane 10 in the radial direction, which forms a closer contact between the first inclined plane 4 and the wall of the piston chamber 3, that is, the greater the pressure of the high-pressure fluid, the better the sealing performance of the first inclined plane 4.

### Embodiment 2

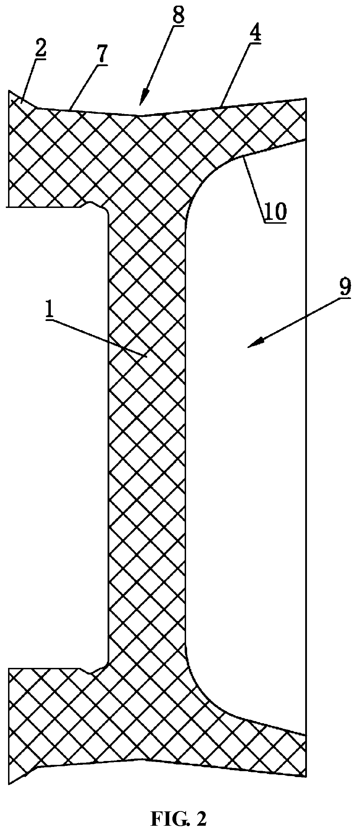

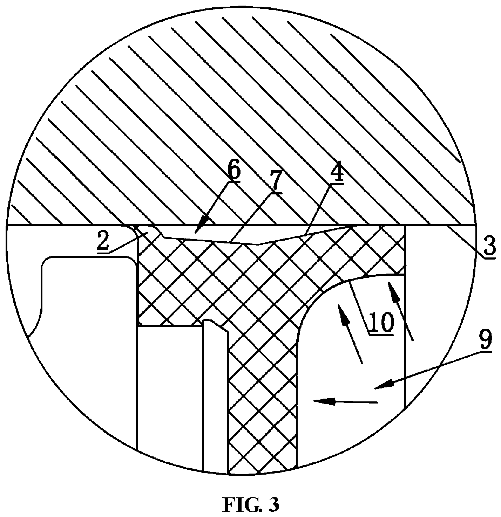

Provided herein is an elastic piston, as shown in Figs. 2-4. The elastic piston includes a piston body 1, which is provided with a first inclined plane 4 and a second inclined plane 7. The second inclined plane 7 is provided at a sidewall of a side of the piston body 1, and the first inclined plane 4 is provided at a sidewall of the other side of the piston body 1. The first inclined plane 4 and the second inclined plane 7 preferably directly intersect or are connected through an intermediate plane. The first inclined plane 4, the second inclined plane 7 and a sidewall of the piston body 1 form a recess 8. Referring to Fig. 3, when the piston body 1 is received in the piston chamber 3, a part of the piston body 1 is in contact with the piston chamber 3, thereby forming a gap 6 between the piston body 1 and the piston chamber 3.

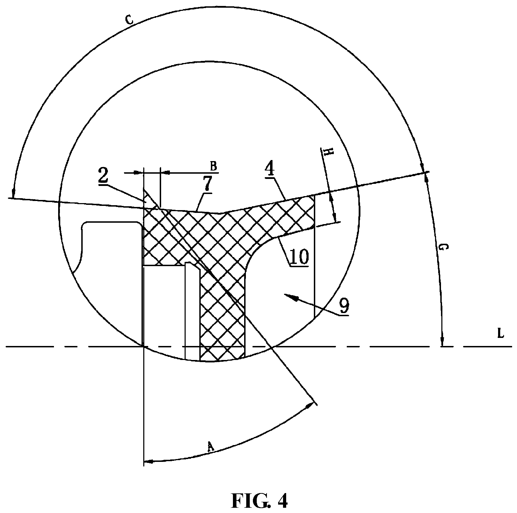

Referring to Fig. 4, the first inclined plane 4 and the second inclined plane 7 meet at a first angle C that is preferably greater than 60° and less than 180°. In some embodiments, the first inclined plane 4 and the second inclined plane 7 are connected through an intermediate plane, at this time, multiple angles can be formed by the first inclined plane 4 and the second inclined plane 7. The first inclined plane 4 and a central axis L of the piston body 1 form a second angle G that is preferably greater than 5° and less than 90°.

A diameter of the end of the other side of the piston body 1 is larger than a diameter of the piston chamber 3, so that the piston body 1 is received in the piston chamber 3. The first inclined plane 4 elastically abuts against the wall of the piston chamber 3 to create good sealing. Therefore, both sides of the piston body 1 can form good sealing against the wall of the piston chamber 3.

The elastic piston of the present application realizes good sealing mainly because the skirt 2 of the second inclined plane 7 as well as the first inclined plane 4 elastically abut against the wall of the piston chamber 3, which requires low machining accuracy. In addition, both of the first inclined plane 4 and the second inclined plane 7 have greater elastic deformation in the radial direction due to the presence of the recess 8, so as to more easily tightly abut against the piston chamber 3. Moreover, when both first inclined plane 4 and the skirt 2 of the second inclined plane 7 elastically abut against the wall of the piston chamber 3, a center axis of the piston body 1 is automatically aligned with an axis of the piston chamber 3, that is, the piston body 1 of the present application can be automatically centered.

Referring to Fig. 4, a cross section of the skirt 2 may be triangular, quadrangular, semicircular and elliptical. The skirt 2 occupies a part of the second inclined plane 7. A width B of the skirt 2 is greater than 0.01 mm. Preferably, the skirt 2 has a triangular cross section. An end wall of the side of the piston body 1 that outwardly extends is a side wall of the triangular skirt 2. The side wall of the skirt 2 having a triangular cross section forms a third angle A with respect to an end wall of the side of the piston body 1. The third angle A is greater than 15° and less than 75°. The skirt 2 is configured to ensure good air tightness during the reciprocating movement of the piston body 1. Specifically, the up-and-down motion of the piston body 1 forms negative pressure within the piston chamber. Because the skirt 2 consistently and elastically abuts against the wall of the piston chamber 3, air is maintained outside the piston chamber and fails to be mixed with the fluid in the piston chamber, improving the pump body in the operation stability and the service life and reducing failure risk during the operation.

Further, an end wall of the other side of the piston body 1 is recessed inward to form a pressure chamber 9 that is U-shaped. The pressure chamber 9 is provided with a third inclined plane 10. When the piston body 1 moves under pressure, the high-pressure fluid in the pressure chamber 9 presses toward the third inclined plane 10 in the radial direction, which forms a closer contact between the first inclined plane 4 and the wall of the piston chamber 3, that is, the greater the pressure of the high-pressure fluid, the better the sealing performance of the first inclined plane 4.

Preferably, the third inclined plane 10 leans in the same direction as the first inclined plane 4. The third inclined plane 10 and the first inclined plane 4 can be, but not necessarily parallel. The third inclined plane 10 can be, but not necessarily include multiple section. A distance H between the third inclined plane 10 and the first inclined plane 4 is greater than 0.1 mm.

The elastic piston of Embodiment 1 or the elastic piston of Embodiment 2 is adopted in a mobile high-pressure pumping system of this embodiment. The adopted elastic piston is elastically received in the piston chamber 3, and can reciprocate axially in the piston chamber 3 under the action of a power system.

In addition, terms "first", "second" and the like are illustrative, and merely intended to distinguish the same type of items. For example, a "first" item may also be referred to as a "second" item, and similarly, a "second" item may also be referred to as a "first" item, without departing from the scope of the present application.

The above are only the preferred embodiments of the present application. It should be pointed out that any improvements and replacements made by those skilled in the art without departing from the technical principles of the present application shall fall within the scope of the present application.

## Claims

1. An elastic piston, comprising a piston body; **characterized in that** an end of a side of the piston body outwardly protrudes and extends in a radial direction to form a skirt; and a maximum diameter of the skirt is larger than a diameter of a piston chamber.

2. The elastic piston according to claim 1, **characterized in that** a sidewall of the other side of the piston body leans outward in a radial direction and forward in an axial direction to form a first inclined plane; the first inclined plane abuts against the piston chamber; a maximum diameter of the first inclined plane is larger than the diameter of the piston chamber; and the first inclined plane, the skirt and the piston chamber form a gap.

3. The elastic piston according to claim 1, **characterized in that** a first inclined plane is provided at a sidewall of the other side of the piston body; a second inclined plane is provided at a sidewall of the side of the piston body; a concave region is formed on a center of the piston body; the first inclined plane and the second inclined plane meet at a first angle; a second angle is formed by the first inclined plane and a central axis of the piston body; and a maximum diameter of the first inclined plane is larger than the diameter of the piston chamber.

4. The elastic piston according to any one of claims 1-3, **characterized in that** a cross section of the skirt is triangular; and an end wall of the side of the piston body outwardly extends in the radial direction to form a side wall of the skirt.

5. The elastic piston according to claim 4, **characterized in that** a width of the skirt is greater than 0.01 mm.

6. The elastic piston according to claim 3, **characterized in that** the first angle is greater than 60° and less than 180°; and the second angle is greater than 5° and less than 90°.

7. The elastic piston according to claim 2 or 3, **characterized in that** an end wall of the other side of the piston body is recessed inward to form a pressure chamber; and a third inclined plane is circumferentially provided at a sidewall of the pressure chamber.

8. The elastic piston according to claim 7, **characterized in that** the third inclined plane and the first inclined plane are tilted in the same direction.

9. The elastic piston according to claim 8, **characterized in that** a thickness between the third inclined plane and the first inclined plane is greater than 0.1 mm.

10. A high-pressure pumping system, comprising the elastic piston according to any one of claims 1-9;
wherein the elastic piston is elastically received in a piston chamber and is able to reciprocate in the piston chamber.
